# EUROPEAN PATENT SPECIFICATION

(11) **EP 0 686 445 B1**
(45) Date of publication and mention of the grant of the patent: **16.08.2000**
(21) Application number: 95107644.7
(22) Date of filing: 19.05.1995
(51) Int. Cl.: B22D 11/22, B22D 11/04

(54) **Method to control the deformations of the sidewalls of a crystalliser, and continuous-casting crystalliser**
Verfahren zum Kontrollieren der Verformung von Seitenwänden einer Kokille sowie Stranggiesskokille
Procédé de régulation de la déformation des faces latérales d'une lingotière, et lingotière pour la coulée continue

(30) Priority: 06.06.1994 IT UD940096; 06.02.1995 IT UD950013; 06.02.1995 IT UD950015
(43) Date of publication of application: 13.12.1995
(73) Proprietor: DANIELI & C. OFFICINE MECCANICHE S.p.A., 33042 Buttrio (UD) (IT)
(72) Inventor: Benedetti, Giampietro, I-33030 Campoformido (UD) (IT); Gensini, Gianni, I-33010 S.Stefano di Buia (UD) (IT); Pavlicevic, Milorad, I-33100 Udine (IT); Poloni, Alfredo, I-34070 Redipuglia (GO) (IT)
(74) Representative: Petraz, Gilberto Luigi

(56) References cited:
- DE-A- 1 916 503
- DE-A- 2 106 634
- DE-A- 3 423 475
- DE-A- 4 127 333
- FR-A- 2 223 115
- FR-A- 2 661 120
- GB-A- 2 016 977
- US-A- 3 520 352
- METALLURGICAL TRANSACTIONS B., vol. 13B, no. 1, WARRENDALE, PA, US, pages 91-104, SAMARASEKERA ET AL. 'The Thermal Distortion of Continous-Casting Billet Molds.'
- PATENT ABSTRACTS OF JAPAN vol. 008 no. 136 (M-304) ,23 June 1984 & JP-A-59 035856 (KAWASAKI SEITETSU KK) 27 February 1984
- J.K.BRIMAKOMBE "Empowerment with Knowledge-Towards the Intelligent Mould for the Continuous Casting of Steel Billets",Metallurgical Transaction B,Volume 24B, December 1993,pages 917-935

## Description

This invention concerns a method to control the deformations of the sidewalls of a crystalliser, and a continuous-casting crystalliser, as set forth in the respective main claims.

The invention is employed in association with a mould used in a continuous casting plant for the production of billets, blooms or slabs of any desired type and section.

The field of continuous casting still entails a plurality of problems which have not yet been overcome and which are linked to the high temperatures to which the sidewalls of the crystalliser are subjected.

To be more exact, it is known that the temperature of the sidewalls of the crystalliser, notwithstanding the circulation of cooling fluid, changes in the direction of the casting with a maximum value reached at about the meniscus of the molten metal.

The uneven temperature along the sidewalls of the crystalliser causes an uneven deformation of those sidewalls together with their outward displacement in relation to their initial position in the cold state, this deformation being due to the thermal expansion of the material, with resulting problems linked to the surface faults caused by this uneven deformation on the billets or blooms being formed.

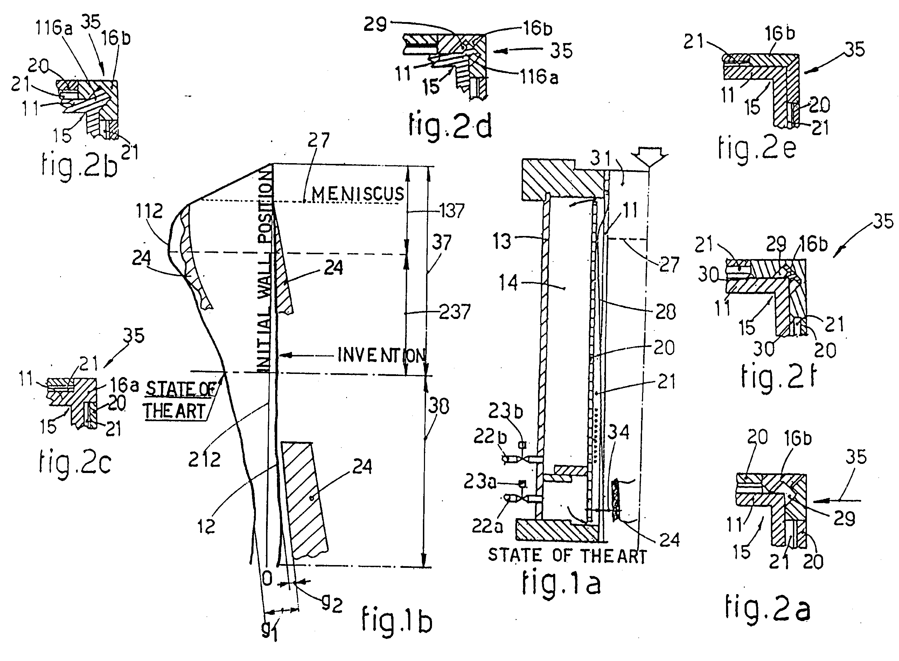

Owing to the deformation of the crystalliser caused by the thermal field the sidewalls of the crystalliser in their upper zone (see Figs.1a and 1b and the zone 37, which shows in an intentionally deformed manner the behaviour of the median line of a sidewall 112 of a crystalliser of the state of the art) take on a great negative taper 28, namely outwards, in their first segment 137 immediately below the meniscus 27 and then take on a positive taper in the successive segment 237.

Fig.1b indicates with the reference line **"O"** the position in the cold state of the sidewall 212 of the crystalliser, which in this case is shown as being straight but which could also take on one of the different known forms with which the sidewalls of the crystalliser are embodied.

The strongly negative taper, shown with the line **"28"** in the upper zone 37 causes the solidifying billet/bloom/slab 24 to penetrate deeply within the deformed sidewall 112 of the crystalliser with resulting great difficulties of extraction and descent of the cast product.

Moreover, this negative taper entails great problems during the vertical oscillations which the mould undergoes to assist descent of the cast product.

Furthermore, an air space of a value **"g1"** is caused in the lower zone 38 of the crystalliser between the sidewall 112 of the crystalliser and the skin of the product owing both to the shrinkage of the solidifying skin and to the outward deformation of the sidewall 112 due to the thermal field.

The progressive separation of the skin from the sidewall 112 of the crystalliser takes on great values and involves problems of the uniformity of the cooling, with a resulting very great reduction of heat exchange and therefore of formation of the skin.

Moreover, even without taking account of the above drawbacks due to the great negative taper in the first upper segment 137 of the upper zone 37, the heat exchange in the rigid crystallisers of the state of the art has acceptable values only along the first segment 137 of the crystalliser extending along about one quarter of the length of the same, normally about 200 mm. below the meniscus, where the skin of the billet/bloom/slab is substantially in contact with the sidewall of the crystalliser.

In the lower zone 38 of the crystalliser, where the separation of the skin from the sidewall of the crystalliser takes place, the heat exchange is greatly reduced to a value of heat flux of about 1.5 to 2 MW/m².

The article of J.K. BRIMACOMBE "Empowerment with Knowledge - Towards the Intelligent Mould for the Continuous Casting of Steel Billets", METALLURGICAL TRANSACTIONS B, Volume 24B, DECEMBER 1993, pages 917-935, shows clearly that in crystallisers of the state of the art the heat flux in the zone of the exit of the cast product from the crystalliser is between about 1.2 and 1.4 MW/m², whereas it does not exceed 2 MW/m² in the zone where the separation of the skin from the sidewall of the crystalliser begins.

So as to ensure that the billet/bloom/slab leaving the crystalliser has a thickness of skin such as to prevent its breakage and the resulting break-out of liquid metal, it is therefore necessary to employ a reduced casting speed.

So as to prevent separation of the skin of the billet/bloom/slab from the sidewalls of the crystalliser, crystalliser models having a variable section have been disclosed in which the sidewalls converge in the downward direction; to be more exact, the shape of the development of the sidewalls of the crystalliser along the casting direction has been proposed to be a function of the coefficient of shrinkage of the material.

Attempts have been made with the various tapers of the crystalliser to minimise the air space which is created between the solidified skin and the sidewalls of the crystalliser so as to prevent the great reduction of heat flux.

This system, however, is not financially advisable inasmuch as the crystalliser has to be replaced on each occasion when the composition of the metal being cast is altered, and therefore this system causes great problems upon variation of the extraction speed, thereby involving a burden for the user.

So as to attempt to reduce the deformation of the sidewalls of the crystalliser, rigid crystallisers have been employed the sidewalls of which have a thickness at the meniscus of about 11 mm. or more, but this contrivance has not solved the problem.

Where the billets or blooms have a square, rectangular or generally polygonal cross-section, another problem is linked to the fact that the corners of the billet or bloom in the upper segment of the crystalliser are subject to a more intense cooling since at those corners the heat is removed on both sides of the corner.

The result is that at the corners of the billet or bloom the skin forms more quickly and the resulting shrinkage of the material has the effect that the billet or bloom is separated very soon from the sidewalls of the crystalliser, thus interrupting the cooling and solidifying process and tending to bring the solidified part back to a liquid state.

For this reason the skin of the billet or bloom at the corners is less thick than along the sidewalls of the billet or bloom, and gradients of temperature between the corners and the sides of the billet or bloom are created.

These temperature gradients generate tensions both within the sidewalls of the crystalliser and within the billet or bloom being cooled, and these tensions lead to the formation of cracks and other surface faults which reduce the quality of the outgoing product.

Moreover, so as to avoid excessive abrasion of the sidewalls of the crystalliser, the inner surface of those sidewalls is generally lined with **Ni/Cr**, which however possesses little slipperiness.

In the crystallisers of the state of the art it is therefore necessary to employ lubricating oils or powders which entail an additional production cost and which reduce the heat exchange still further.

The present applicants have designed, tested and embodied this invention to overcome the shortcomings of the state of the art and to achieve further advantages, such as in particular an appreciable increase in the speed of extraction.

This invention is set forth and characterised in the respective main claims, while the dependent claims describe variants of the idea of the main embodiment.

The purpose of this invention is to provide a method to control the deformations of the single sidewalls of a crystalliser for the continuous casting of billets/blooms/slabs, so that this deformation is almost nil, together with cancellation of the negative taper of the first segment of the crystalliser or even with the taper being directed towards the inside of the crystalliser with a view to improving the working of the crystalliser and to achieving greater extraction speeds.

A further purpose is to provide a crystalliser in which, on the one hand, the separation of the skin of the solidifying billet/ bloom/slab from the sidewall of the crystalliser is reduced and, on the other hand, the thermal deformation of the single sidewalls of the crystalliser is compensated so that the sidewalls follow the natural shrinkage of the solidifying billet/ bloom/slab.

The crystalliser according to the invention has sidewalls with an average thickness of a reduced value, between 4 and 15 mm. but advantageously between 4 and 10 mm., in proportion to their width, so that they have a substantially resilient behaviour according to the pressure of the cooling fluid acting on the outside of the sidewalls.

This pressure has a value strictly correlated with that thickness so as to ensure the resilient behaviour.

To be more exact, the single sidewalls of the crystalliser according to the invention adapt themselves to the respective sides of the billet/bloom/slab being formed while that billet/bloom/slab solidifies during its passage through the crystalliser.

According to the invention this adaptation of the sidewalls of the crystalliser is caused by the pressure of the cooling fluid, so that, by acting longitudinally on the pressure or on the reduction of pressure within a channel for circulation of the cooling fluid, the deformation induced in the sidewall is varied, thus also making possible the adaptation of the crystalliser to a plurality of types of cast metal and to various fields of casting speeds.

In the first formulation of the method according to the invention the sidewalls of the crystalliser have specific longitudinal zones associated with a specific pressure of the cooling fluid, the pressure being variable between one longitudinal zone and another according to a desired range of pressures.

In this way, upon variation of the lateral dimension of the sidewall, the different pressures employed make possible also the use of different thicknesses of sidewall in the same crystalliser.

A second formulation of the invention arranges that at least one longitudinal sidewall of the crystalliser is associated with at least one specific range of pressures of the cooling fluid.

In this invention, by cooling fluid is generally meant water for industrial use, at any rate water which is normally used to cool the crystalliser, and such water will be employed hereinafter as a reference element.

According to a variant the invention arranges to employ as a cooling fluid water to which has been added substances which enable that water to be used even at temperatures lower than **"0"** and down to -25°C/-30°C upon entry into the mould.

A variant of the invention arranges for the use, as a cooling fluid, of other liquid substances such as glycol, for instance, at a temperature between -10°C/-15°C and -70°C/-80°C upon entry into the mould.

A further variant of the invention covers the use, as a cooling fluid, of liquefied gases, whether pure or combined with other gases or liquids, at a temperature between -3°C and -270°C upon entry into the mould.

Hereinafter, for simplicity of description, by cooling fluid is meant water, also called normal water, as normally used to cool continuous casting moulds in an industrial process.

The crystalliser is embodied in such a way that its dimensions in its transverse direction already take partial account of thermal expansion due to its heating; in such a case the vertical median line in the cold state may be straight or may already have a positive taper substantially in the vicinity of the meniscus.

The crystalliser is advantageously dimensioned in such a way that its cross-section, when it is in the state of normal expansion owing to the inclusion of liquid metal within it, corresponds substantially to the section of the billet/bloom/slab which is to be produced at its outlet.

Moreover, the crystalliser is dimensioned in such a way that its longitudinal section takes into account a typical expansion for a given range of steels which are to be cast with that crystalliser.

The invention provides for the use of pressures much higher than those normally used; in any event the invention arranges that the pressure of the cooling fluid is correlated with the deformation desired at a given longitudinal zone of the sidewall of the crystalliser in relation to the thickness of that sidewall, to the characteristics of the material forming that sidewall (normally copper or copper alloy), to the characteristics of the cast material and to the extraction speed.

The pressure at which the cooling fluid is fed is therefore at least a function of the inward deformation to be imparted to the sidewall of the crystalliser, or at least to a zone of that sidewall in relation to the thickness of the relative sidewall at that zone.

The invention arranges that the pressure of the cooling fluid is such as will deform the sidewalls of the crystalliser inwards so as at least to recover the deformation induced by the thermal field along the crystalliser in order to keep the sidewall substantially straight along the nominal line in the cold state, or even displaced positively in relation to that nominal line.

By acting on the range of pressures it is possible to control the deformation of the single sidewalls in a different manner at the various heights of the crystalliser, thus obtaining different effects.

The scope of the invention includes also the correlation of the pressure of the cooling fluid with the value of the thermal flux to be removed from the molten metal through the sidewall of the crystalliser.

In relation to the vertical area positioned in the vicinity of, and immediately below, the meniscus of molten metal, the pressure of the cooling fluid acting against the sidewalls of the crystalliser recovers the deformation induced by the heat in those sidewalls of the crystalliser and makes them linear or substantially linear or even induces in them a positive displacement, namely towards the inside of the casting chamber.

In particular, the pressure of the cooling fluid eliminates the negative taper caused in the case of rigid crystallisers (Figs.1a and 1b), thus bringing about an improvement of the surface of the solidifying skin and a minimisation of the depth of the oscillation marks, namely those notches created in the skin owing to the oscillation of the mould during the descent of the cast product.

In relation to the whole vertical sidewalls of the crystalliser, the pressure of the cooling fluid can alter as desired the local or complete taper of the sidewalls.

In particular, with regard to the lower zone of the crystalliser where the separation of the forming skin from the sidewalls of the crystalliser begins with a resulting formation of an air space, the pressure of the cooling fluid has the result of minimising or even eliminating the air space created between the sidewalls of the crystalliser and the solidified skin of the billet/bloom/slab.

This enables a greater heat flux to be achieved than with the rigid crystallisers of the state of the art and enables a heat flux to be obtained in the lower zone up to 5 MW/m² between the sidewalls of the crystalliser and the skin being formed.

The pressure of the cooling fluid can be varied by maintaining a constant **ΔP** along the whole fluid circulation channel of a determined zone, so as to induce a substantially constant deformation or recovery of deformation along that whole zone.

According to a variant, the **ΔP** between the inlet and outlet can be made variable through one and the same fluid circulation channel so as to induce variable deformations or recovery of deformations suitable for the obtaining of a desired result along the height of the crystalliser.

According to a variant of the invention, the crystalliser is associated, in the longitudinal direction, with at least two cooling chambers with the relative fluid circulation channels so as to obtain at least two longitudinally consecutive and independently manageable zones, so that in those zones there may be differentiated and independent ranges of pressure of the cooling fluid.

According to the invention differentiated and independent cooling zones can also be obtained.

Moreover, according to the invention it is possible to obtain within each zone independent and different conditions of cooling and of ranges of pressure of the cooling fluid with regard to one or more surfaces of the crystalliser.

According to the invention the cooling conditions and pressure are governed by a data processor which receives the necessary information from measurement means, which cooperate with the sidewalls of the crystalliser and/or with the surface of the billet/bloom/ slab emerging from the crystalliser.

The measurement means may be means to detect the temperature of the sidewalls of the crystalliser or else, or also, means to detect the surface temperature of the billet/bloom/slab in the vicinity of the position of the exit of the same from the crystalliser, or else, or also, means to detect the force of friction between the inner side of the sidewalls of the crystalliser and the skin of the forming billet/bloom/slab.

In the crystalliser according to the invention the temperature measurement means are associated at least with the lower part of the crystalliser where the separation of the skin from the sidewalls of the crystalliser takes place.

According to a variant the temperature measurement means are also associated with the surface of the billet/bloom/slab as the latter leaves the crystalliser.

In the upper zone of the crystalliser, where it is necessary to control the deformation of the sidewalls caused by the thermal field relative to the inclusion of the molten metal, the pressures according to the invention vary from 3 to 15 bar.

In the lower zone of the crystalliser, where the skin is separated from the sidewalls of the crystalliser, the pressure according to the invention vary from 5 to 20 bar.

Where the air space between the sidewalls and the skin takes on in a given zone a value higher than that envisaged, the invention arranges to increase in feedback the pressure of the cooling fluid so as to bring the value of the air space back to the desired value.

According to a variant, where the billet/bloom has a rectangular section, the wider sidewalls of the rectangle of the crystalliser are governed by independent pressures different from the pressures acting on the narrower sidewalls.

According to a variant, the sidewalls are subjected to the same range of pressures but with an effect variable in relation to the different width, and possibly different thickness, of the sidewall.

By extension the invention arranges that each side of the crystalliser is subjected to its own independent range of pressures of the cooling fluid.

According to the invention the cooling fluid can flow in the same direction as, or in the opposite direction to, the direction of feed of the billet/bloom within the casting chamber.

According to a variant of the invention the fluid circulation channels do not affect the corner zones of the crystalliser, the purpose being to prevent causing an excessive cooling of the corners of the billet/bloom/slab being formed.

This situation ensures a uniform growth of the solidified layer and eliminates the tendency of the outgoing billet/bloom to take on a rhomboidal section.

According to a further variant of the invention these corners zone are cooled in a different manner from the rest of the sidewalls of the crystalliser.

At the corners the crystalliser according to the invention includes stiffening elements suitable at least to control the deformations of the crystalliser caused by the thermal expansion as a result of the heating of the crystalliser.

These stiffening elements are embodied directly in the crystalliser itself or are auxiliary external elements which are secured to, or are caused to cooperate with, the corners of the crystalliser.

The crystalliser according to the invention advantageously has its inner surface lined with lining materials possessing good thermal conductivity, good wear resistance and great slipperiness (low coefficient of friction), such as the carbides and/or other alloys of hard metals.

In the crystalliser according to the invention the lining materials are advantageously applied by means of the plasma spray technique, which ensures excellent adhesion of the lining materials even to the copper sidewalls.

According to a further variant, so as to increase the heat exchange between the cooling fluid and the sidewalls of the crystalliser, at least part of one surface of the fluid circulation channel includes flow disturbing means, which break up the fluid streams of the outermost layer of the fluid and cause the cooling fluid to run in a turbulent manner with a resulting increase of the heat exchange.

The disturbing means can be embodied by means of rough areas, hollows, sequences of enlargements and narrowings, etc.

Moreover, so as to improve the heat exchange, the outer surface of the sidewalls of the crystalliser may include ribs or other shapes.

In one form of embodiment of the crystalliser according to the invention the intermediate walls defining the fluid circulation chambers can be moved in relation to the sidewalls of the crystalliser and cooperate with adjustment means for their approach towards, or distancing from, those sidewalls.

This adjustment can be perpendicular to the sidewalls or can make possible the obtaining of desired angles between the sidewalls of the crystalliser and the intermediate walls.

This situation makes possible the variation, also in a longitudinal direction, of the transverse width, or span, of the fluid circulation channel and therefore of the cross-section of the passage of the cooling fluid, thus enabling the range of pressures and the speed of the cooling fluid in the fluid circulation channel to be regulated.

The attached figures are given as a non-restrictive example and show some preferred embodiments of the invention as follows:-
- Fig.1a: shows a diagrammatic partial longitudinal section of a mould of the state of the art;
- Fig.1b: shows with a partial diagrammatic section a comparison in an enlarged scale of the deformations of a crystalliser of the state of the art with the deformations of a crystalliser according to the invention;
- Figs.2a to 2f: show partial cross-sections of some possible forms of embodiment of the stiffening element;
- Fig.3a: shows a longitudinal section of a mould employing a crystalliser according to the invention and including one single longitudinal cooling chamber;
- Fig.3b: shows a longitudinal section of a mould employing a crystalliser according to the invention and including two longitudinal cooling chambers;
- Fig.4a: shows a partial diagrammatic longitudinal section of a mould employing a crystalliser according to the invention and including one single longitudinal cooling chamber;
- Fig.4b: shows a partial diagrammatic longitudinal section of a mould employing a crystalliser according to the invention and including two longitudinal cooling chambers;
- Fig.5: shows a cross-section of a mould employing a crystalliser according to the invention.

The reference number 10 in the attached figures denotes generally a mould according to the invention, with which a nozzle 25 to discharge molten metal is caused to cooperate.

The mould 10 can have a square, rectangular or polygonal cross-section or any desired cross-section.

The mould 10 according to the invention comprises a crystalliser 11 the sidewalls 12 of which have a thickness between 4 and 15 mm., but advantageously between 4 and 10 mm.

The sidewalls 12 of the crystalliser 11 have at least their inner surface lined with a material having a good thermal conductivity, a good resistance to wear and great slipperiness (a low coefficient of friction), such as the carbides for instance or other alloys of hard metals.

These lining materials are advantageously applied by the plasma spray technique or by hypersonic spraying.

The mould 10 according to the invention comprises containing walls 13 positioned outside the crystalliser 11 and defining therewith cooling chambers 14 in which a cooling fluid is caused to run.

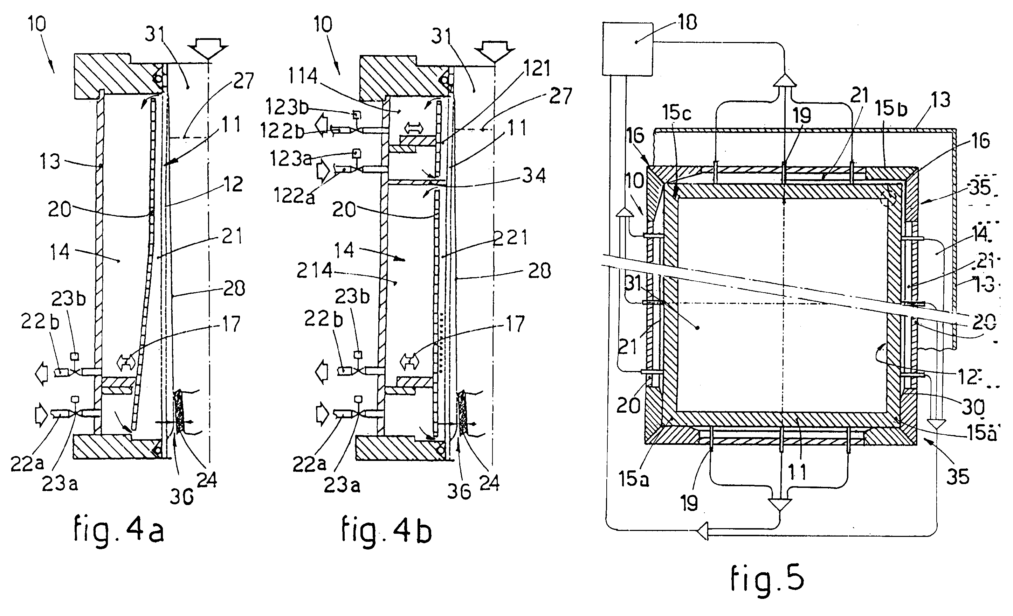

According to a first embodiment of the invention shown in Figs.3a and 4a the cooling chamber 14 is one single longitudinal chamber and takes up the whole longitudinal extent of the sidewall 12 of the crystalliser 11.

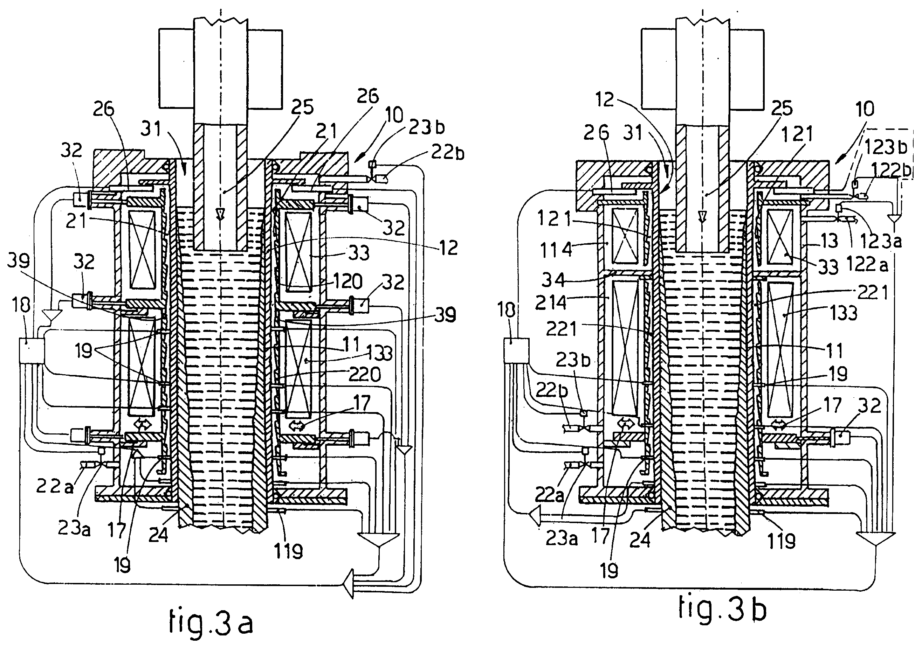

According to the variant shown in Figs.3b and 4b two or more cooling chambers 14 (114-214) are positioned longitudinally in sequence and in them the cooling fluid under pressure circulates independently.

According to the requirements of heat exchange between the cooling fluid and the crystalliser 11 and therefore in relation to the process of cooling and solidification of the billet/bloom/slab 24 being formed, the cooling fluid can circulate in the opposite direction to, or in the same direction as, the direction of feed of the billet/bloom/slab 24 being formed.

The cooling chambers 14 includes a feeder conduit 22a-122a equipped with an adjustment valve 23a-123a and a discharge conduit 22b-122b also equipped with an adjustment valve 23b-123b.

These adjustment valves 23a-23b-123a-123b have the purpose of adjusting in a desired manner the feed pressure and/or the reduction of pressure of the cooling fluid within the specific cooling chambers 14-114-214.

The cooling chambers 14 in the mould 10 according to the invention contain on each side of the crystalliser 11 their own specific intermediate walls 20, which can be moved transversely according to the arrows 17 of Figs.3a-3b and 4a-4b by means of relative motors 32.

A fluid circulation channel 21 is provided between the intermediate wall 20 and the sidewall 12 of the crystalliser 11 and has a variable cross-section of its passage if the intermediate wall 20 is movable.

By adjusting transversely the position of the intermediate walls 20 it is possible to change the transverse width, or span, of the relative circulation channels 21 and therefore the hydraulic conditions of the flow of cooling fluid.

In the example of Fig.3a the intermediate wall 20 is embodied with two parts, namely an upper part 120 and a lower part 220 with a line of connection 39 but can also be embodied with a plurality of parts.

The connection between the upper 120 and lower 220 parts is obtained at 39 by means of a hinge, a plurality of hinges or in another manner, so that it is possible to change independently the transverse width of the circulation channel 21 by modifying its geometry.

According to the invention, where there are sections with unequal sides, as in the case of rectangular sections, the wider sidewalls have pressure factors different from the pressure factors of the narrower sidewalls.

According to a variant each sidewall has its own independent range of pressures.

According to another variant each sidewall is divided into longitudinal zones defined by a specific range of pressures of the cooling fluid.

Figs.1a-1b and 4a-4b show the behaviour of crystallisers of the state of the art (Figs.1a-1b) and crystallisers according to the invention (Figs.4a-4b).

The crystalliser 11 in the vicinity of the meniscus 27 and therebelow, namely in the upper zone 37, is heated by the liquid metal running within the casting chamber 31 and is deformed outwards in a resilient manner (sidewall 112), and the pressure of the cooling fluid acting in the specific circulation channels 21-121 of that zone 37 acts in such a manner as to compensate that deformation and reduces it, thus cancelling the negative taper induced in the sidewalls or even imparting to the sidewalls a partial positive taper towards the inside of the casting chamber 31 (sidewall 12).

In the same way, in the remaining longitudinal part of the crystalliser 11, or lower part 38, which may include one or more cooling chambers 14-214 and respective circulation channels 21-221 according to the behaviour of the skin being formed, the pressure of the cooling fluid in the relative specific circulation channel 21-221 enables the interspace 36 between the sidewall 12 of the crystalliser 11 and the skin of the solidifying billet/bloom/ slab 24 to be reduced until it has been cancelled.

The situation of maintaining an interspace 36 at a very reduced value **"g2"** or at a **nil** value enables the coefficient of heat exchange between the billet/bloom/slab 24 and the crystalliser 11 to be kept at a high value, as shown in Figs.1b, 4a and 4b.

Figs.1a and 1b show with the line 28 that at the meniscus 27 the sidewall 12 of the crystalliser 11 bulges outwards and thereafter takes up lower down a positive taper; in the meantime the skin being formed of the billet/bloom/slab 24 has shrunk and creates, together with the outward deformation induced by the thermal field, an air interspace 36 of a value **"g1"**, which reduces severely the removed heat flux.

By means of the invention the pressure of the cooling fluid eliminates the negative taper of the sidewall 12 of the crystalliser 11 in the zone below the meniscus 27 and, by displacing the sidewall 12 inwards, recovers and substantially cancels the air interspace 36.

The result of this severe reduction of the air interspace 36 and therefore of the thermal resistance which that air interspace 36 introduces is the increase of the heat exchange flux between the sidewall 12 and the skin of the billet/bloom/slab 24, for this flux can be increased from a value of 1.5 to 2 MW/m² in the case of crystallisers of the state of the art up to a value of 5 MW/m² in crystallisers 11 according to the invention.

In the case of a crystalliser 11 according to the invention with a rectangular section, at least its wider sidewalls include circulation chambers 14 and circulation channels 21 which are independent and have independent pressures of the cooling fluid.

The cooling chamber 14 in the example shown in Figs.3b and 4b is divided by separator walls 34 into two cooling chambers 114-214, each with its own independent circulation of cooling fluid 22a-22b-23a-23b-122a-122b-123a-123b.

As we said before, according to the invention the independent circulation can be extended so as to affect also single longitudinal zones of sidewall 12 of the crystalliser 11.

According to one embodiment of the invention the circulation channels 21 do not cooperate directly with the corners 15 of the crystalliser 11, which are not cooled by the cooling fluid running within the circulation channels 21.

In the form of embodiment shown in Figs.2a-2f a segment 35 of an increased thickness is included at the corners 15 of the crystalliser 11 so as to reduce the heat exchange with the cooling fluid.

The segment 35 of an increased thickness can be embodied by means of stiffening elements 16 obtained wholly (16a - Fig.2c) or partly (116a - Figs.2b and 2d) directly in the sidewall 12 of the crystalliser 11 or may consist of independent stiffening elements 16b (Figs.2a-2e-2f).

The independent stiffening elements 16b can be associated with or rigidly connected, by brazing for instance, to the corners 15 of the crystalliser 11 according to the invention.

A stiffening element 16a-116a provided in the sidewall 12 of the crystalliser 11 can be conformed as a solid polygon or have a T-shape or another form.

Where the stiffening elements 16b are independent, they can be conformed as a **"T"**, or an **"L"** or an **"Ω"** or can have other forms.

In the form of embodiment shown in Figs.2d and 2f the stiffening element, which in Fig.2d is provided partly 116a in the sidewall 12 of the crystalliser 11, whereas in Fig.2f it is an independent element 16b, is T-shaped and is inserted in a space 29 defined in the segment 35 of an increased thickness.

Cooling fluid may or may not run through the space 29.

The stiffening element 16, which may also consist of a plurality of pieces, performs the double task of stiffening and of reducing the heat exchange at the corners 15 of the crystalliser 11.

In the embodiment shown as an example in Fig.5 the segment 35 of an increased thickness has a stiffening element which is not in direct contact with the corners 15b of the crystalliser 11 but is separated therefrom by a given distance of about 0.3 to 0.6 mm.

Moreover, the embodiment relating to the corner 15b and the variant thereof relating to the corner 15c define a geometry suitable to increase the turbulence of the circulating cooling fluid and, amongst other things, to facilitate the alignment of the crystalliser 11.

The circulation channel 21 cooperates at its lateral ends with lateral inclined walls 30 having an inclination which can be varied as required so as to modulate and graduate the heat exchange near the corners 15 of the crystalliser 11 (Figs.2f-5).

The crystalliser 11 can be moved vertically and be rested on load cells 26, which record the force of friction of the billet/bloom /slab 24 against the sidewalls 12 of the crystalliser 11.

Moreover, the crystalliser 11 is associated, at various heights and advantageously along its whole length, with temperature measurement means 19-119, which measure respectively the temperature of the various zones on the sidewalls 12 of the crystalliser 11 and at the exit of the billet/bloom/slab 24 and on the billet/bloom/slab 24 leaving that exit.

The load cells 26 and the temperature measurement means 19-119 send their data to a data processor 18 which governs the adjustment valves 23a-23b-123a-123b and adjusts as required the pressure in the various cooling chambers 14-114-214 and in the respective circulation channels 21-121-221 and even in relation to each single vertical portion of the sidewalls 12.

The data processor 18 can also govern the motors 32 adjusting the transverse width, or span, of the circulation channels 21-121-221 and can regulate and, at any rate, control electromagnetic stirrers 33-133 so as to cause a circulation of their magnetic flow in the same direction or in opposite directions.

So as to increase the heat exchange between the cooling fluid and the crystalliser 11, the surfaces which define the circulation channels 21 can advantageously include disturbing elements, which break the fluid streams of the outermost layer of the fluid and cause the cooling fluid to run with a turbulent motion within the circulation channels 21 with a resulting increase of heat exchange.

These disturbing elements may be embodied on the outer surface of the sidewalls 12 of the crystalliser 11 and on the inner surface of the intermediate wall 20.

So as to increase the heat exchange, the outer surface of the sidewalls 12 of the crystalliser 11 may include grooves, rough areas, jutting portions or other means suitable to increase the surface of heat exchange, these grooves, rough areas, jutting portions or other means advantageously, but not only, extending vertically.

## Claims

1. Method for controlling the deformations of the sidewalls (12) of a crystalliser (11) of a mould (10) for the continuous casting of billets/blooms /slabs (24), wherein the crystalliser (11) cooperates externally with a box-shaped structure (13) for creating a cooling chamber (14) in which a cooling fluid circulates, and internally with the skin of the billets/blooms/slabs (24) being formed, wherein the cooling chamber (14) comprises an intermediate wall (20) which creates a circulation channel (21) in cooperation with the outer surface of the sidewalls (12) of the crystalliser (11), and wherein the crystalliser (11) comprises at least one upper longitudinal zone (37) including at least the meniscus (27) of the liquid metal and the portion just below the meniscus (27), and a lower longitudinal zone (38) beginning in the vicinity of the zone of separation of the forming skin from the inner surface of said sidewalls (12) of the crystalliser (11) and extending towards the outlet of the crystalliser (11), the method being characterised by the step of varying the pressure of said cooling fluid in the lower longitudinal zone (38) of the crystalliser (11) for deforming at least one said sidewalls (12), the value of said pressure being a function of the desired value (g2) of an air interspace (36) between said one sidewall (12) and the skin of the forming billet/bloom/slab (24), and said desired value of air interspace (36) tending towards a zero value.

2. Method as in Claim 1, wherein said pressure is suitable to deform said one sidewall (12) towards the inside of the crystalliser (11) as far as the position of said one sidewall (12) in the cold state or even beyond that position in the cold state.

3. Method as in Claim 1 or 2, in which the pressure of the cooling fluid in the upper zone (37) of the crystalliser (11) is suitable to eliminate the negative taper of the sidewall (12) induced by the thermal field in that upper zone (37).

4. Method as in any claim hereinbefore, in which each longitudinal zone of each sidewall (12) of the crystalliser (11) is defined by a specific range of pressures of the cooling fluid.

5. Method as in any claim hereinbefore, in which the pressure of the cooling fluid acting on a specific longitudinal zone of the crystalliser (11) is equal on all the sidewalls (12) of the crystalliser (11).

6. Method as in any of Claims 1 to 4 inclusive, in which the pressure of the cooling fluid acting on a specific longitudinal zone of the crystalliser (11) is specific for at least one sidewall (12) of the crystalliser (11).

7. Method as in any claim hereinbefore, in which the pressure of the cooling fluid is a function at least of the thickness of the sidewall (12) of the crystalliser (11).

8. Method as in any claim hereinbefore, in which the pressure of the cooling fluid is a function of the casting speed and/or of the type of material.

9. Method as in any claim hereinbefore, in which the reduction of pressure within each single circulation channel (21) is a function of the required modification of the inward taper relating to the segment of sidewall (12) associated with that circulation channel (21).

10. Method as in Claim 9, in which the reduction of pressure of the fluid circulating within the circulation channels (21) is modulated by altering the transverse width, or span, and/or the geometry of those circulation channels (21).

11. Method as in Claim 10, in which the reduction of pressure of the cooling fluid for a given geometry of the circulation channel (21) is adjusted by acting on adjustment valves (23a-23b-123a-123b).

12. Method as in any claim hereinbefore, in which the cooling fluid is constituted by water.

13. Method as in any of Claims 1 to 11 inclusive, in which the cooling fluid is water containing additives at a temperature down to -25°C/-30°C.

14. Method as in any of Claims 1 to 11 inclusive, in which the cooling fluid is glycol or another substance which can be likened thereto at a temperature between -10°C and -80°C.

15. Method as in any of Claims 1 to 11 inclusive, in which the cooling fluid is pure liquid gas or liquid gas combined with another gas or liquid at a temperature between -3°C and -270°C.

16. Method as in any claim hereinbefore, in which, where the cooling fluid consists of water, the pressure at the inlet of the circulation channel (21) is between 5 and 20 bar.

17. Method as in Claim 16, in which the pressure of the cooling fluid in the cooling chamber (14-214) associated with the lower zone (38) of the crystalliser (11) is between 5 and 20 bar.

18. Method as in Claim 16, in which the pressure of the cooling fluid in the cooling chamber (14-214) associated with the upper zone (37) of the crystalliser (11) is between 3 and 15 bar.

19. Method as in any claim hereinbefore, in which the pressure of the cooling fluid in each longitudinal zone of the crystalliser (11) is governed by a data processor (18).

20. Method as in Claim 19, in which the data processor (18) is governed by temperature measurement means (19-119) included at least in the zone corresponding to the lower zone (38) of the crystalliser (11).

21. Method as in any claim hereinbefore, in which the corners (15) of the crystalliser (11) undergo at least a less intense cooling than the sidewalls (12) of the crystalliser (11).

22. Crystalliser of a mould (10) for the continuous casting of billets/blooms /slabs (24), comprising a plurality of sidewalls (12) which cooperate externally with a box-shaped structure for creating a cooling chamber (14), in which a cooling fluid circulates, and internally with the skin of the billets/blooms/slabs (24) being formed, said cooling chamber (14) comprising an intermediate wall (20) which creates a circulation channel (21) in cooperation with the outer surface of said sidewalls (12), and further comprising at least one upper longitudinal zone (37) including at least the meniscus (27) of the liquid metal and the portion just below the meniscus (27), and a lower longitudinal zone (38) beginning in the vicinity of the zone of separation of the forming skin from the inner surface of said sidewalls (12) and extending towards the outlet of the crystalliser (11), the crystalliser (11) being characterised in that it carries out the method of the claims hereinebefore, in that at least one longitudinal zone of at least one of said sidewalls (12) has a thickness between 4 and 15 mm, and in that pressure adjustment means (23a, 23b, 123a, 123b) associated to said circulation channel (21) are provided for adjusting the pressure or the range of pressures of feed of the cooling fluid within the relative circulation channel (21) taking into account the thickness of said one sidewall (12) and the required inward displacement thereof.

23. Crystalliser as in Claim 22, in which a single circulation channel (21) laps all the sidewalls (12) of the crystalliser (11).

24. Crystalliser as in Claim 22, in which at least one specific circulation channel (21) is included for at least one sidewall (12) of the crystalliser (11).

25. Crystalliser as in any of Claims 22 to 24 inclusive, in which the section of the circulation channel perpendicular to the axis of the crystalliser (11) has a transverse length shorter than the transverse length of the relative sidewall (12) of the crystalliser (11) and a transverse width or span of the channel as much as 3 mm.

26. Crystalliser as in any of Claims 22 to 25 inclusive, in which the corners (15) of the crystalliser (11) cooperate with a wall segment having an increased thickness (35).

27. Crystalliser as in any of Claims 22 to 26 inclusive, which includes stiffening elements (16) associated with the corners (15) of the crystalliser (11).

28. Crystalliser as in any of Claims 22 to 27 inclusive, in which the stiffening elements (16a-116a) are provided directly in the sidewalls (12) of the crystalliser (11).

29. Crystalliser as in any of Claims 22 to 28 inclusive, in which the stiffening elements (16b) are auxiliary external elements which cooperate with the corners (15) of the crystalliser (11).

30. Crystalliser as in any of Claims 22 to 29 inclusive, in which the crystalliser (11) is associated with load cells (26) connected to a data processor (18).

31. Crystalliser as in any of Claims 22 to 30 inclusive, in which at least the lower zone (38) of the crystalliser (11) is associated with temperature measurement means (19) connected to the data processor (18).

32. Crystalliser as in any of Claims 22 to 31 inclusive, in which at the exit of the crystalliser (11) temperature measurement means (119) to measure the temperature of the skin of the outgoing billet/bloom/slab (24) are included and are associated with the data processor (18).

33. Crystalliser as in any of Claims 22 to 32 inclusive, in which at least part of the intermediate wall (20) on at least one side of the crystalliser (11) can be adjustably moved in relation to that sidewall (12) of the crystalliser (11).

34. Crystalliser as in any of Claims 22 to 33 inclusive, in which at least one wide surface defining the circulation channel (21) comprises disturbing elements to disturb the outermost layer of the fluid streams of the cooling fluid.

35. Crystalliser as in any of Claims 22 to 34 inclusive, in which the outer surface of the sidewall (12) of the crystalliser (11) and/or the inner surface of the intermediate wall (20) include rough areas, grooves or jutting portions suitable to increase the heat exchange surface.

36. Crystalliser as in any of Claims 22 to 35 inclusive, in which the inner surface of the sidewall (12) of the crystalliser (11) is lined with carbides or other alloys of hard metals.

37. Crystalliser as in any of Claims 22 to 36 inclusive, in which the lining of the inner surface of the sidewall (12) of the crystalliser (11) is applied by deposition by means of plasma spray or by deposition by means of hypersonic spraying.

38. Crystalliser as in any of Claims 22 to 37 inclusive, in which the data processor (18) is connected to adjustment valves (23a-23b-123a-123b) for regulating the cooling fluid circulating in the specific circulation channels (21-121-221).

39. Crystalliser as in any of Claims 22 to 38 inclusive, which includes at least one electromagnetic stirrer (33-133) associated with the cooling chamber (14-114-214) and governed by the data processor (18).

40. Crystalliser as in any of Claims 22 to 39 inclusive, in which the data processor (18) is connected to means (32) for varying the position of at least one longitudinal zone of the intermediate wall (20) in relation to the relative portion of the sidewall (12) of the crystalliser (11).

## Patentansprüche

1. Verfahren zum Einschränken der Verformungen der Seitenwände (12) eines Kristallisators (11) einer Form (10) für das Stranggießen von Strängen/Blöcken/Brammen (24), wobei der Kristallisator (11) außen mit einer kastenförmigen Struktur (13) zusammenwirkt, die eine Kühlkammer (14) bildet, in der ein Kühlfluid zirkuliert, und innen mit der Gußhaut der Stränge/Blöcke/Brammen (24), die hergestellt werden, und wobei die Kühlkammer (14) eine Zwischenwand (20) umfaßt, die mit der Außenfläche der Seitenwände (12) des Kristallisators (11) zusammenwirkend einen Zirkulationskanal (21) bildet, und wobei der Kristallisator (11) wenigstens einen oberen Längsbereich (37) umfaßt, der wenigstens den Meniskus (27) des flüssigen Metalls und den Abschnitt unmittelbar unter des Meniskus (27) einschließt, und einen unteren Längsbereich (38), der in der Nähe des Bereiches der Trennung der entstehenden Gußhaut von der Innenfläche der Seitenwände (12) des Kristallisators (11) beginnt und sich auf den Auslaß des Kristallisator (11) zu erstreckt, wobei das Verfahren durch den Schritt des Veränderns des Drucks des Kühlfluid in dem unteren Längsbereich (38) des Kristallisators (11) gekennzeichnet ist, um wenigstens eine der Seitenwände (12) zu verformen, wobei der Wert des Drucks eine Funktion des gewünschten Wertes (g₂) eines Luftzwischenraums (36) zwischen der einen Seitenwand (12) und der Gußhaut des/der entstehenden Strangs/Blocks/Bramme (24) ist, und der gewünschte Wert des Luftzwischenraums (36) auf Null zugeht.

2. Verfahren nach Anspruch 1, wobei der Druck dazu geeignet ist, die eine Seitenwand (12) zur Innenseite des Kristallisators (11) bis an die Position der einen Seitenwand (12) im kalten Zustand oder sogar über diese Position im kalten Zustand hinaus zu verformen.

3. Verfahren nach Anspruch 1 oder 2, wobei der Druck des Kühlfluids im oberen Bereich (37) des Kristallisators (11) dazu geeignet ist, die negative Konizität der Seitenwand (12) aufzuheben, die durch das Wärmefeld in diesem oberen Bereich (37) bewirkt wird.

4. Verfahren nach einem der vorangehenden Ansprüche, wobei jeder Längsbereich jeder Seitenwand (12) des Kristallisators (11) durch einen speziellen Bereich von Drücken des Kühlfluids definiert ist.

5. Verfahren nach einem der vorangehenden Ansprüche, wobei der Druck des Kühlfluids, der auf einen bestimmten Längsbereich des Kristallisators (11) wirkt, an allen Seitenwänden (12) des Kristallisators (11) gleich ist.

6. Verfahren nach einem der Ansprüche 1 bis einschließlich 4, wobei der Druck des Kühlfluids, der auf einen speziellen Längsbereich des Kristallisator (11) wirkt, ein spezieller Druck für wenigstens eine Seitenwand (12) des Kristallisators (11) ist.

7. Verfahren nach einem der vorangehenden Ansprüche, wobei der Druck des Kühlfluids eine Funktion wenigstens der Dicke der Seitenwand (12) des Kristallisators (11) ist.

8. Verfahren nach einem der vorangehenden Ansprüche, wobei der Druck des Kühlfluids eine Funktion der Gießgeschwindigkeit und/oder des Materialtyps ist.

9. Verfahren nach einem der vorangehenden Ansprüche, wobei die Verringerung des Drucks in jedem einzelnen Zirkulationskanal (21) eine Funktion der erforderlichen Veränderung der nach innen gerichteten Konizität in bezug auf das Segment der Seitenwand (12), das zu diesem Zirkulationskanal (21) gehört, ist.

10. Verfahren nach Anspruch 9, wobei die Verringerung des Drucks des Fluids, das in den Zirkulationskanälen (21) zirkuliert, abgewandelt wird, indem die Breite in Querrichtung bzw. Spannbreite und/oder die Form dieser Zirkulationskanäle (21) verändert werden.

11. Verfahren nach Anspruch 10, wobei die Verringerung des Drucks des Kühlfluids bei einer bestimmten Form des Zirkulationskanals (21) reguliert wird, indem auf Regulierventile (23a-23b-123a-123b) eingewirkt wird.

12. Verfahren nach einem der vorangehenden Ansprüche, wobei das Kühlfluid aus Wasser besteht.

13. Verfahren nach einem der Ansprüche 1 bis einschließlich 11, wobei es sich bei dem Kühlfluid um Wasser, das Zusätze enthält, bei einer Temperatur bis zu -25°C/-30°C handelt.

14. Verfahren nach einem der Ansprüche 1 bis einschließlich 11, wobei es sich bei dem Kühlfluid um Glykol oder eine andere damit vergleichbare Substanz bei einer Temperatur zwischen -10°C und -80°C handelt.

15. Verfahren nach einem der Ansprüche 1 bis einschließlich 11, wobei es sich bei dem Kühlfluid um reines Flüssiggas oder Flüssiggas in Kombination mit einem anderen Gas oder einer Flüssigkeit bei einer Temperatur zwischen -3°C und -270°C handelt.

16. Verfahren nach einem der vorangehenden Ansprüche, wobei, wenn das Kühlfluid aus Wasser besteht, der Druck am Einlaß des Zirkulationskanals (21) zwischen 5 und 20 bar liegt.

17. Verfahren nach Anspruch 16, wobei der Druck des Kühlfluids in der Kühlkammer (14-214), die zum unteren Bereich (38) des Kristallisators (11) gehört, zwischen 5 und 20 bar liegt.

18. Verfahren nach Anspruch 16, wobei der Druck des Kühlfluids in der Kühlkammer (14-214), die zu dem oberen Bereich (37) des Kristallisators (11) gehört, zwischen 3 und 15 bar liegt.

19. Verfahren nach einem der vorangehenden Ansprüche, wobei der Druck des Kühlfluids in jedem Längsbereich des Kristallisators (11) durch eine Datenverarbeitungseinrichtung (18) gesteuert wird.

20. Verfahren nach Anspruch 19, wobei die Datenverarbeitungseinrichtung (18) durch Temperaturmeßeinrichtungen (19-119) gesteuert wird, die wenigstens in dem Bereich enthalten sind, der dem unteren Bereich (38) des Kristallisators (11) entspricht.

21. Verfahren nach einem der vorangehenden Ansprüche, wobei die Ecken (15) des Kristallisators (11) wenigstens einer geringeren Kühlung unterzogen werden als die Seitenwände (12) des Kristallisators (11).

22. Kristallisator einer Form (10) für das Stranggießen von Strängen/Blöcken/Brammen (24), der eine Vielzahl von Seitenwänden (12) umfaßt, die außen mit einer kastenförmigen Struktur zusammenwirken, die eine Kühlkammer (14) bildet, in der ein Kühlfluid zirkuliert, und innen mit der Gußhaut der Stränge/Blöcke/Brammen (24), die hergestellt werden, wobei die Kühlkammer (14) eine Zwischenwand (20) umfaßt, die mit der Außenfläche der Seitenwände (12) zusammenwirkend einen Zirkulationskanal (21) bildet, und des weiteren wenigstens einen oberen Längsbereich (37) umfaßt, der wenigstens den Meniskus (27) des flüssigen Metalls und den Abschnitt unmittelbar unterhalb des Meniskus (27) einschließt, und einen unteren Längsbereich (38), der in der Nähe des Bereiches der Trennung der entstehenden Gußhaut von der Innenfläche der Seitenwände (12) beginnt und sich auf den Auslaß des Kristallisators (11) zu erstreckt, wobei der Kristallisator (11) **dadurch gekennzeichnet** ist, daß mit ihm das Verfahren der vorangehenden Ansprüche ausgeführt wird, daß wenigstens ein Längsbereich wenigstens einer der Seitenwände (12) eine Dicke zwischen 4 und 15 mm hat und Druckregulierungseinrichtungen (23a, 23b, 123a, 123b), die zu dem Zirkulationskanal (21) gehören, vorhanden sind, um den Druck bzw. den Bereich der Drücke des zugeführten Kühlfluids in dem entsprechenden Zirkulationskanal (21) unter Berücksichtigung der Dicke der einen Seitenwand (12) und der erforderlichen Verschiebung derselben nach innen zu regulieren.

23. Kristallisator nach Anspruch 22, wobei ein einzelner Zirkulationskanal (21) alle Seitenwände (12) des Kristallisators (11) abdeckt.

24. Kristallisator nach Anspruch 22, wobei wenigstens ein bestimmter Zirkulationskanal (21) für wenigstens eine Seitenwand (12) des Kristallisators (11) vorhanden ist.

25. Kristallisator nach einem der Ansprüche 22 bis einschließlich 24, wobei der Querschnitt des Zirkulationskanals senkrecht zur Achse des Kristallisators (11) eine Querlänge hat, die kürzer ist als die Querlänge der entsprechenden Seitenwand (12) des Kristallisators (11), und eine Querbreite bzw. Spannbreite des Kanals von bis zu 3 mm.

26. Kristallisator nach einem der Ansprüche 22 bis einschließlich 25, bei dem die Ecken (15) des Kristallisators (11) mit einem Wandsegment mit größerer Dicke (35) zusammenwirken.

27. Kristallisator nach einem der Ansprüche 22 bis einschließlich 26, der Versteifungselemente (16) enthält, die zu den Ecken (15) des Kristallisators (11) gehören.

28. Kristallisator nach einem der Ansprüche 22 bis einschließlich 27, bei dem die Versteifungselemente (16a-116a) direkt in den Seitenwänden (12) des Kristallisators (11) vorhanden sind.

29. Kristallisator nach einem der Ansprüche 22 bis einschließlich 28, bei dem die Versteifungselemente (16b) zusätzliche äußere Elemente sind, die mit den Ecken (15) des Kristallisators (11) zusammenwirken.

30. Kristallisator nach einem der Ansprüche 22 bis einschließlich 29, wobei zu dem Kristallisator (11) Lastzellen (26) gehören, die an eine Datenverarbeitungseinrichtung (18) angeschlossen sind.

31. Kristallisator nach einem der Ansprüche 22 bis einschließlich 30, wobei wenigstens zu dem unteren Bereich (38) des Kristallisators (11) Temperaturmeßeinrichtungen (19) gehören, die an die Datenverabeitungseinrichtung (18) angeschlossen sind.

32. Kristallisator nach einem der Ansprüche 22 bis einschließlich 31, wobei in den Austritt des Kristallisators (11) Temperaturmeßeinrichtungen (119) zum Messen der Temperatur der Gußhaut des/der austretenden Strangs/Blocks/Bramme (24) integriert und mit der Datenverarbeitungseinrichtung (18) verbunden sind.

33. Kristallisator nach einem der Ansprüche 22 bis einschließlich 32, wobei wenigstens ein Teil der Zwischenwand (20) auf wenigstens einer Seite des Kristallisators (11) in bezug auf diese Seitenwand (12) des Kristallisators (11) verstellbar bewegt werden kann.

34. Kristallisator nach einem der Ansprüche 22 bis einschließlich 33, wobei wenigstens eine breite Fläche, die den Zirkulationskanal (21) bildet, Hemmelemente umfaßt, die die äußerste Schicht der Fluidströme des Kühlfluids hemmen.

35. Kristallisator nach einem der Ansprüche 22 bis einschließlich 34, wobei die Außenfläche der Seitenwand (12) des Kristallisators (11) und/oder die Innenfläche der Zwischenwand (20) rauhe Bereiche, Rinnen oder vorspringende Abschnitte enthalten, durch die die Wärmeübergangsfläche vergrößert werden kann.

36. Kristallisator nach einem der Ansprüche 22 bis einschließlich 35, wobei die Innenfläche der Seitenwand (12) des Kristallisators (11) mit Karbiden oder anderen Legierungen aus Hartmetallen ausgekleidet ist.

37. Kristallisator nach einem der Ansprüche 22 bis einschließlich 36, wobei die Auskleidung der Innenfläche der Seitenwand (12) des Kristallisators (11) durch Abscheiden mittels Plasmaspritzen oder durch Abscheiden mittels Hyperschallspritzen aufgetragen wird.

38. Kristallisator nach einem der Ansprüche 22 bis einschließlich 37, wobei die Datenverarbeitungseinrichtung (18) mit Regulierventilen (23a-23b-123a-123b) verbunden ist, um das Kühlfluid zu regulieren, das in den entsprechenden Zirkulationskanälen (21-121-221) zirkuliert.

39. Kristallisator nach einem der Ansprüche 22 bis einschließlich 38, der wenigstens eine elektromagnetische Rühreinrichtung (33-133) enthält, die zu der Kühlkammer (14-114-214) gehört und von der Datenverarbeitungseinrichtung (18) gesteuert wird.

40. Kristallisator nach einem der Ansprüche 22 bis einschließlich 39, wobei die Datenverarbeitungseinrichtung (18) mit Einrichtungen (32) verbunden ist, mit denen die Position wenigstens eines Längsbereiches der Zwischenwand (20) in bezug auf den entsprechenden Abschnitt der Seitenwand (12) des Kristallisators (11) verändert werden kann.

## Revendications

1. Procédé pour contrôler les déformations des parois latérales (12) d'une lingotière (11) d'un moule (10) pour la coulée continue de billettes/lingots/brames (24), dans lequel la lingotière (11) coopère extérieurement avec une structure en forme de boîte (13) pour créer une chambre de refroidissement (14) dans laquelle un fluide de refroidissement circule, et intérieurement avec la peau des billettes/lingots/brames (24) qui sont formés, dans lequel la chambre de refroidissement (14) comprend une paroi intermédiaire (20) qui crée un canal de circulation (21) en coopération avec la surface extérieure des parois latérales (12) de la lingotière (11), et dans lequel la lingotière (11) comprend au moins une zone longitudinale supérieure (37) comprenant au moins le ménisque (27) du métal liquide et la partie juste au-dessous du ménisque (27), et une zone longitudinale inférieure (38) commençant à proximité de la zone de séparation de la peau qui se forme de la surface intérieure desdites parois latérales (12) de la lingotière (11) et s'étendant vers la sortie de la lingotière (11), le procédé étant caractérisé par l'étape consistant à faire varier la pression dudit fluide de refroidissement dans la zone longitudinale inférieure (38) de la lingotière (11) pour déformer au moins l'une desdites parois latérales (12), la valeur de ladite pression étant une fonction de la valeur souhaitée (g2) d'un espace d'air (36) entre ladite une paroi latérale (12) et la peau des billettes/lingots/brames qui sont formés (24), et ladite valeur souhaitée de l'espace d'air (36) tendant vers une valeur nulle.

2. Procédé selon la revendication 1, dans lequel ladite pression est adéquate pour déformer ladite une paroi latérale (12) vers l'intérieur de la lingotière (11), jusqu'à la position de ladite une paroi latérale (12) dans l'état froid, ou même au-delà de cette position dans l'état froid.

3. Procédé selon la revendication 1 ou 2, dans lequel la pression du fluide de refroidissement dans la zone supérieure (37) de la lingotière (11) est adéquate pour éliminer le cône négatif de la paroi latérale (12) induit par le champ thermique dans cette zone supérieure (37).

4. Procédé selon l'une quelconque des revendications précédentes, dans lequel chaque zone longitudinale de chaque paroi latérale (12) de la lingotière (11) est définie par une plage de pressions spécifique du fluide de refroidissement.

5. Procédé selon l'une quelconque des revendications précédentes, dans lequel la pression du fluide de refroidissement qui agit sur une zone longitudinale spécifique de la lingotière (11) est identique sur toutes les parois latérales (12) de la lingotière (11).

6. Procédé selon l'une quelconque des revendications 1 à 4 incluse, dans lequel la pression du fluide de refroidissement qui agit sur une zone longitudinale spécifique de la lingotière (11) est spécifique pour au moins une paroi latérale (12) de la lingotière (11).

7. Procédé selon l'une quelconque des revendications précédentes, dans lequel la pression du fluide de refroidissement est une fonction au moins de l'épaisseur de la paroi latérale (12) de la lingotière (11).

8. Procédé selon l'une quelconque des revendications précédentes, dans lequel la pression du fluide de refroidissement est une fonction de la vitesse de coulée et/ou du type de matériau.

9. Procédé selon l'une quelconque des revendications précédentes, dans lequel la réduction de la pression dans chaque canal de circulation unique (21) est une fonction de la modification requise du cône vers l'intérieur en rapport avec le segment de paroi latérale (12) associé à ce canal de circulation (21).

10. Procédé selon la revendication 9, dans lequel la réduction de la pression du fluide qui circule à l'intérieur des canaux de circulation (21) est modulée en modifiant la largeur transversale, ou l'ouverture, et/ou la géométrie de ces canaux de circulation (21).

11. Procédé selon la revendication 10, dans lequel la réduction de la pression du fluide de refroidissement pour une géométrie donnée du canal de circulation (21) est ajustée en agissant sur les vannes de réglage (23a-23b-123a-123b).

12. Procédé selon l'une quelconque des revendications précédentes, dans lequel le fluide de refroidissement est constitué d'eau.

13. Procédé selon l'une quelconque des revendications 1 à 11 incluse, dans lequel le fluide de refroidissement consiste en de l'eau contenant des additifs à une température atteignant -25°C/-30°C.

14. Procédé selon l'une quelconque des revendications 1 à 11 incluse, dans lequel le fluide de refroidissement consiste en du glycol ou une autre substance qui peut être comparée à celui-ci à une température comprise entre - 10 °C et -80 °C.

15. Procédé selon l'une quelconque des revendications 1 à 11 incluse, dans lequel le fluide de refroidissement consiste en du gaz liquide pur ou en du gaz liquide combiné à un autre gaz ou liquide à une température comprise entre -3 °C et -270 °C.

16. Procédé selon l'une quelconque des revendications précédentes, dans lequel, lorsque le fluide de refroidissement consiste en de l'eau, la pression à l'entrée du canal de circulation (21) est comprise entre 5 et 20 bars.

17. Procédé selon la revendication 16, dans lequel la pression du fluide de refroidissement dans la chambre de refroidissement (14-214) associée à la zone inférieure (38) de la lingotière (11) est comprise entre 5 et 20 bars.

18. Procédé selon la revendication 16, dans lequel la pression du fluide de refroidissement dans la chambre de refroidissement (14-214) associée à la zone supérieure (37) de la lingotière (11) est comprise entre 3 et 15 bars.

19. Procédé selon l'une quelconque des revendications précédentes, dans lequel la pression du fluide de refroidissement dans chaque zone longitudinale de la lingotière (11) est réglée par un processeur de données (18).

20. Procédé selon la revendication 19, dans lequel le processeur de données (18) est régi par des moyens de mesure de température (19-119) compris au moins dans la zone correspondant à la zone inférieure (38) de la lingotière (11).

21. Procédé selon l'une quelconque des revendications précédentes, dans lequel les coins (15) de la lingotière (11) subissent au moins un refroidissement moins intense que les parois latérales (12) de la lingotière (11).

22. Lingotière d'un moule (10) pour la coulée continue de billettes/lingots/brames (24), comprenant une pluralité de parois latérales (12) qui coopèrent extérieurement avec une structure en forme de boîte pour créer une chambre de refroidissement (14) dans laquelle un fluide de refroidissement circule, et intérieurement avec la peau des billettes/lingots/brames (24) qui sont formés, ladite chambre de refroidissement (14) comprenant une paroi intermédiaire (20) qui crée un canal de circulation (21) en coopération avec la surface extérieure desdites parois latérales (12), et comprenant, de plus, au moins une zone longitudinale supérieure (37) comprenant au moins le ménisque (27) du métal liquide et la partie juste au-dessous du ménisque (27), et une zone longitudinale inférieure (38) commençant à proximité de la zone de séparation de la peau qui se forme de la surface intérieure desdites parois latérales (12) et s'étendant vers la sortie de la lingotière (11), la lingotière (11) étant caractérisée en ce qu'elle exécute le procédé des revendications précédentes, en ce qu'au moins une zone longitudinale d'au moins l'une desdites perois latérales (12) présente une épaisseur comprise entre 4 et 15 mm, et en ce que des moyens de réglage de pression (23a, 23b, 123a, 123b) associés audit canal de circulation (21) sont prévus pour ajuster la pression ou la plage de pressions de fourniture du fluide de refroidissement dans le canal de circulation relatif (21) en prenant en compte l'épaisseur de ladite une paroi latérale (12) et le déplacement vers l'intérieur requis de celle-ci.

23. Lingotière selon la revendication 22, dans laquelle un canal de circulation unique (21) enveloppe toutes les parois latérales (12) de la lingotière (11).

24. Lingotière selon la revendication 22, dans laquelle au moins un canal de circulation spécifique (21) est inclus pour au moins une paroi latérale (12) de la lingotière (11).

25. Lingotière selon l'une quelconque des revendications 22 à 24 incluse, dans laquelle la section du canal de circulation perpendiculaire à l'axe de la lingotière (11) a une longueur transversale plus courte que la longueur transversale de la paroi latérale (12) relative de la lingotière (11) et une largeur transversale ou ouverture du canal atteignant 3 mm.

26. Lingotière selon l'une quelconque des revendications 22 à 25 incluse, dans laquelle les coins (15) de la lingotière (11) coopèrent avec un segment de paroi présentant une épaisseur accrue (35).

27. Lingotière selon l'une quelconque des revendications 22 à 26 incluse, qui comprend des éléments de raidissement (16) associés aux coins (15) de la lingotière (11).

28. Lingotière selon l'une quelconque des revendications 22 à 27 incluse, dans laquelle les éléments de raidissement (16a-116a) sont prévus directement dans les parois latérales (12) de la lingotière (11).

29. Lingotière selon l'une quelconque des revendications 22 à 28 incluse, dans laquelle les éléments de raidissement (16b) sont des éléments externes secondaires qui coopèrent avec les coins (15) de la lingotière (11).

30. Lingotière selon l'une quelconque des revendications 22 à 29 incluse, dans laquelle la lingotière (11) est associée à des dynamomètres (26) connectés à un processeur de données (18).

31. Lingotière selon l'une quelconque des revendications 22 à 30 incluse, dans laquelle au moins la zone inférieure (38) de la lingotière (11) est associée à des moyens de mesure de température (19) connectés au processeur de données (18).

32. Lingotière selon l'une quelconque des revendications 22 à 31 incluse, dans laquelle, à la sortie de la lingotière (11), des moyens de mesure de température (119) pour mesurer la température de la peau des billettes/lingots/brames sortants (24) sont inclus et sont associés au processeur de données (18).

33. Lingotière selon l'une quelconque des revendications 22 à 32 incluse, dans laquelle au moins une partie de la paroi intermédiaire (20) sur au moins un côté de la lingotière (11) peut être déplacée de manière ajustable par rapport à cette paroi latérale (12) de la lingotière (11).

34. Lingotière selon l'une quelconque des revendications 22 à 33 incluse, dans laquelle au moins une surface large définissant le canal de circulation (21) comprend des éléments perturbateurs pour perturber la couche la plus extérieure des courants de fluide du fluide de refroidissement.

35. Lingotière selon l'une quelconque des revendications 22 à 34 incluse, dans laquelle la surface extérieure de la paroi latérale (12) de la lingotière (11) et/ou la surface intérieure de la paroi intermédiaire (20) comprend des zones rugueuses, des rainures ou des parties saillantes adéquates pour augmenter la surface d'échange de chaleur.

36. Lingotière selon l'une quelconque des revendications 22 à 35 incluse, dans laquelle la surface intérieure de la paroi latérale (12) de la lingotière (11) est doublée de carbures ou d'autres alliages de métaux durs.

37. Lingotière selon l'une quelconque des revendications 22 à 36 incluse, dans laquelle le revêtement de la surface intérieure de la paroi latérale (12) de la lingotière (11) est appliquée par dépôt au moyen d'une projection au plasma ou par dépôt au moyen d'une projection hypersonique.

38. Lingotière selon l'une quelconque des revendications 22 à 37 incluse, dans laquelle le processeur de données (18) est connecté aux vannes de réglage (23a-23b-123a-123b) pour réguler le fluide de refroidissement qui circule dans les canaux de circulation spécifiques (21-121-221).

39. Lingotière selon l'une quelconque des revendications 22 à 38 incluse, qui comprend au moins un mélangeur-agitateur électromagnétique (33-133) associé à la chambre de refroidissement (14-114-214) et commandé par le processeur de données (18).

40. Lingotière selon l'une quelconque des revendications 22 à 39 incluse, dans laquelle le processeur de données (18) est connecté à des moyens (32) pour faire varier la position d'au moins une zone longitudinale de la paroi intermédiaire (20) par rapport à la partie relative de la paroi latérale (12) de la lingotière (11).
